# EUROPÄISCHE PATENTANMELDUNG

(11) **EP 4 047 696 A1**
(43) Veröffentlichungstag der Anmeldung: **24.08.2022**
(21) Anmeldenummer: 21158625.0
(22) Anmeldetag: 23.02.2021
(51) Int. Cl.: H01M 8/0232, C25B 11/032, H01M 8/0245, H01M 8/0258, H01M 8/0263, H01M 8/124

(54) **SOC-STACK-INTERKONNEKTOR SOWIE SOC-STACK-ANORDNUNG**

(71) Anmelder: SunFire GmbH, 01237 Dresden (DE)
(72) Erfinder: Strohbach, Thomas, 01309 Dresden (DE); Schade, Christoph, 01445 Radebeul (DE)
(74) Vertreter: Hauck Patentanwaltspartnerschaft mbB

(57) **Zusammenfassung**

Die Erfindung betrifft einen SOC-Stack-Interkonnektor zur Gasverteilung für eine Brennstoff- und/oder eine Elektrolysezellenanordnung aufweisend
- eine Basisplatte, die auf einer ersten Seite mit einer Membranelektrodenanordnung kontaktierbar ist,
- eine auf der zweiten Seite der Basisplatte angeordnete Plattenstruktur, wobei die Plattenstruktur mit einer ersten Seite mit der Basisplatte und mit einer zweiten Seite mit einer weiteren Membranelektrodenanordnung kontaktierbar ist,
wobei die Plattenstruktur eine erste Platte und eine zweite Platte umfasst, die übereinander angeordnet sind, und die erste Platte und die zweite Platte eine gemeinsame Verteilungsstruktur zur Gasverteilung ausbilden,
wobei die erste und die zweite Platte sowie die Basisplatte jeweils einen Gaseinlass und einen Gasauslass aufweisen,
und wobei sich die Hauptrichtung eines Fluidflusses durch die gemeinsame Verteilungsstruktur in einer linearen Richtung zwischen dem Gaseinlass und dem Gasauslass erstreckt, und die gemeinsame Verteilungsstruktur Verbindungen zu dem Gaseinlass und Verbindungen zu dem Gasauslass aufweist,
wobei
- die erste Platte als Teil der gemeinsamen Verteilungsstruktur ein erstes Lochmuster mit einer Vielzahl von Löchern in parallel angeordneten entlang der Hauptrichtung des Fluidflusses ausgerichteten Lochreihen aufweist und kanalfrei ausgebildet ist;
- die zweite Platte als Teil der gemeinsamen Verteilungsstruktur ein zweites Lochmuster mit einer Vielzahl von Löchern in parallel angeordneten entlang der Hauptrichtung des Fluidflusses ausgerichteten Lochreihen aufweist und kanalfrei ausgebildet ist; und
- das erste Lochmuster zu dem zweiten Lochmuster in Hauptrichtung des Fluidflusses versetzt ausgebildet ist, wobei eine Kanalstruktur in Hauptrichtung des Fluidflusses bei der Übereinanderanordnung der ersten und der zweiten Platte ausgebildet wird, die zwischen der ersten und der zweiten Platte in Hauptrichtung des Fluidflusses alterniert.

Ferner betrifft die Erfindung eine SOC-Stack-Anordnung.

## Beschreibung

Die Erfindung betrifft einen SOC-Stack-Interkonnektor zur Gasverteilung für eine Brennstoff- und/oder eine Elektrolysezellenanordnung aufweisend ein Basisplatte, die auf einer ersten Seite mit einer Membranelektrodenanordnung kontaktierbar ist, eine auf der zweiten Seite der Basisplatte angeordnete Plattenstruktur, wobei die Plattenstruktur mit einer ersten Seite mit der Basisplatte kontaktierbar ist und mit einer zweiten Seite mit einer weiteren Membranelektrodenanordnung kontaktierbar ist, wobei die Plattenstruktur eine erste Platte und eine zweite Platte umfasst, die übereinander angeordnet sind, und die erste Platte und die zweite Platte eine gemeinsame Verteilungsstruktur zur Gasverteilung ausbilden, wobei die erste und die zweite Platte sowie die Basisplatte jeweils einen Gaseinlass und einen Gasauslass aufweisen, wobei sich die Hauptrichtung eines Fluidflusses durch die gemeinsame Verteilungsstruktur in einer linearen Richtung zwischen dem Gaseinlass und dem Gasauslass erstreckt, und die gemeinsame Verteilungsstruktur Verbindungen zu dem Gaseinlass und Verbindungen zu dem Gasauslass aufweist.

Ferner betrifft die Erfindung eine SOC-Stack-Anordnung, insbesondere hier eine Brennstoffzellenanordnung, eine Elektrolysezellenanordnung oder auch eine reversible Festoxidzellanordnung.

Im Stand der Technik sind SOC-Systeme, also Festoxidzellen-Systeme (eng. "solid oxide cells, kurz SOC) hinlänglich bekannt, wobei Festoxidzellen in Festoxidbrennstoffzellen (engl. "solid oxide fuel cell(s), kurz SOFC), Festoxidelektrolysezellen (engl. "solid oxide electrolysis cell(s), kurz SOEC) und reversiblen Festoxidzellen (engl. "reversible solid oxide cell(s)", kurz rSOC) eingesetzt werden. All diese Systeme sind gleich oder sehr ähnlich aufgebaut, wobei der Aufbau typischerweise in Form von Stapeln (engl. "stacks") von Zellen erfolgt, die in einer Reihenschaltung miteinander verbunden sind. Die Reihenschaltung erfolgt durch eine abwechselnde Anordnung von Membranelektrodenanordnungen (engl. "membrane electrode assembly", kurz MEA) und Interkonnektoren. Die Interkonnektoren übernehmen neben der elektrischen Verschaltung der Zellstapel insbesondere auch die Zu- und Abfuhr der gasförmigen Medien zu und von den Membranelektrodenanordnungen.

Der hier vorgestellte Interkonnektor bzw. die hier vorgestellte Interkonnektoranordnung ist für die unterschiedlichen SOC-Stack- Anordnungen einsetzbar, also insbesondere für SOEC, SOFC oder auch rSOC-Systeme.

Zum allgemeinen und speziellen Stand der Technik wird insbesondere auf die Druckschrift EP 2 859 608 B1 verwiesen, aus der eine Gasverteilungsanordnung für Brennstoff- oder Elektrolysezellenanordnungen bekannt ist, die ein zu verteilendes gasförmiges Reaktionsfluid auf eine Membranelektrodenanordnungen der Brennstoff- oder Elektrolysezellenanordnung führt. Hierbei wird ein Gasverteilungselement mit erhöhter Leistung vorgestellt, welches eine homogene Verteilung von Reaktivgas auf der Membranelektrodenanordnungen ermöglicht. Hierzu wird vorgeschlagen, auf eine erste Platte mit länglichen nebeneinander angeordneten Gasleitkanälen, die Gas von einem Gaseinlass entlang der Gasleitkanäle zu einem Gasauslass transportieren, eine zweite Platte mit darin angeordneten Homogenisierungskanälen anzuordnen, die wenigstens zwei nebeneinander liegende Gasleitkanäle der ersten Platte miteinander fluidführend verbinden. Die vorgeschlagene Interkonnektoranordnung ist geeignet, eine Stapelanordnung mit Membranelektrodenanordnungen herzustellen. Nachteilig an der vorgeschlagenen Interkonnektoranordnung ist, dass zwar eine bessere Gasverteilung innerhalb der Interkonnektoranordnung erreicht wird, jedoch keine gezielte Umlenkung des Fluids erfolgt, um die Membranelektrodenanordnung in Richtung der Stapelanordnung anzuströmen. Eine Reduzierung des Polarisationswiderstands der Zellanordnung wird daher nicht erreicht.

Aus der Veröffentlichung WO 2008/119328 A1 ist eine Interkonnektoranordnung einen Nickelschaum umfassend bekannt, wobei der Nickelschaum in mit strukturierten und geprägten Kanalstrukturen ausgebildeten Interkonnektorplatten zur besseren Anströmung von Membranelektrodenanordnungen angeordnet ist. Der Nickelschaum bewirkt, neben dem Herstellen eines verbesserten elektrischen Kontakts, durch seine poröse Struktur, eine graduelle Umlenkung des in die Anordnung eingeströmten Fluids in Richtung der Stapelanordnung. Nachteilig an der Anordnung ist, dass der Nickelschaum kompressibel ist und die Umlenkung des Fluids nur bedingt reproduzierbar ist.

Der Polarisationswiderstand wird in der Fachliteratur als Oberbegriff für nicht-ohmsche Widerstände einer Zellanordnung verwendet. Durchtritts- oder Aktivierungspolarisation tritt bei elektrochemischen Teilreaktionen, d.h. der Oxidation bzw. Reduktion der Prozessgase zum Ein- oder Ausbau von Ionen in bzw. aus dem Elektrolyten auf. Der genaue Ablauf der elektrochemischen Reaktionen auf atomarer Ebene ist in den meisten Fällen noch ungeklärt. Es wird angenommen, dass in realen Elektrodenstrukturen eine Reihe serieller und paralleler Reaktionsschritte ablaufen, wobei i.d.R. ein Reaktionsprozess geschwindigkeitsbestimmend ist und den Polarisationswiderstand bestimmt.

Der vorliegenden Erfindung liegt die Aufgabe zugrunde, einen verbesserten Interkonnektor anzugeben, der eine gerichtete und direkte Anströmung einer Membranelektrodenanordnung ermöglicht, um den Polarisationswiderstand der Zellen zu reduzieren und somit den Wirkungsgrad der Zellanordnung zu erhöhen.

Eine weitere Aufgabe der Erfindung kann darin gesehen werden, einen einfach herzustellenden Interkonnektor aufzuzeigen.

Weiter können Aufgaben bzw. Teilaufgaben darin gesehen werden, eine Gasverteilstruktur insbesondere auf Wasserstoffseite eines SOC-Stacks anzugeben, die folgende Anforderungen erfüllt:
- Bereitstellung einer Anordnung aufweisend einem geringen Polarisationswiderstand auf der H2-Seite
- Bereitstellung einer Anordnung, welche entlang der Stack-Richtung, also in z-Richtung, inkompressibel ist, so dass der Stack eine höchstmögliche Robustheit aufweist,
- Bereitstellung einer Anordnung, welche einen reproduzierbaren Strömungswiderstand aufweist und welche kostengünstig herstellbar ist, wobei sowohl die Schritte für die Fertigung des Interkonnektors, als auch die Schritte des Fügens des SOC-Stacks zu berücksichtigen sind, und
- Bereitstellung einer Anordnung, welche chemisch beständig in einer reduzierenden Atmosphäre ist.

Die z-Richtung ist in Bezug auf die Stapelfolge eines SOC-Stacks definiert und wird innerhalb der gesamten Offenbarung so verwendet.

Gelöst wird bzw. werden diese Aufgabe(n) mit einem SOC-Stack-Interkonnektor zur Gasverteilung für eine Brennstoff- und/oder eine Elektrolysezellenanordnung gemäß Hauptanspruch sowie weiter mit einer SOC-Stack-Anordnung gemäß nebengeordnetem Anspruch.

Der SOC-Stack-Interkonnektor zur Gasverteilung für eine Brennstoff- und/oder eine Elektrolysezellenanordnung weist auf:
- eine Basisplatte, die auf einer ersten Seite mit einer Membranelektrodenanordnung kontaktierbar ist,
- eine auf der zweiten Seite der Basisplatte angeordnete Plattenstruktur,
   wobei die Plattenstruktur mit einer ersten Seite mit der Basisplatte und mit einer zweiten Seite mit einer weiteren Membranelektrodenanordnung kontaktierbar ist,
   wobei die Plattenstruktur eine erste Platte und eine zweite Platte umfasst, die übereinander angeordnet sind, und die erste Platte und die zweite Platte eine gemeinsame Verteilungsstruktur zur Gasverteilung ausbilden,
   wobei die erste und die zweite Platte sowie die Basisplatte jeweils einen Gaseinlass und einen Gasauslass aufweisen,
   und wobei sich die Hauptrichtung eines Fluidflusses durch die gemeinsame Verteilungsstruktur in einer linearen Richtung zwischen dem Gaseinlass und dem Gasauslass erstreckt, und die gemeinsame Verteilungsstruktur Verbindungen zu dem Gaseinlass und Verbindungen zu dem Gasauslass aufweist,
und ist dadurch gekennzeichnet, dass
- die erste Platte als Teil der gemeinsamen Verteilungsstruktur ein erstes Lochmuster mit einer Vielzahl von Löchern in parallel angeordneten entlang der Hauptrichtung des Fluidflusses ausgerichteten Lochreihen aufweist und kanalfrei ausgebildet ist;
- die zweite Platte als Teil der gemeinsamen Verteilungsstruktur ein zweites Lochmuster mit einer Vielzahl von Löchern in parallel angeordneten entlang der Hauptrichtung des Fluidflusses ausgerichteten Lochreihen aufweist und kanalfrei ausgebildet ist;
   und
- das erste Lochmuster zu dem zweiten Lochmuster in Hauptrichtung des Fluidflusses versetzt ausgebildet ist, wobei eine Kanalstruktur in Hauptrichtung des Fluidflusses bei der Übereinanderanordnung der ersten und der zweiten Platte ausgebildet wird, die zwischen der ersten und der zweiten Platte in Hauptrichtung des Fluidflusses alterniert.

Die Erfindung besteht in der Verwendung von drei einzelnen übereinander gestapelt angeordneten Platten, wobei die Basisplatte als Basis für die darüber angeordneten zwei weiteren Lochplatten dient und zu diesen zwei Lochplatten einen Abschluss bildet.

Ferner ermöglicht die Basisplatte auf der von den zwei Lochplatten abgewandten Seite eine Produktabführung aus der Membranelektrodenanordnung über entsprechende Kanalstrukturen.

Die einzelnen Platten weisen für sich genommen keine fluid- oder gasleitenden Kanäle auf, so dass die Verwendung nur einer oder nur zweier Platten nicht möglich ist. Es bedarf der Kombination der drei Platten, nämlich der Basisplatte und den zwei darauf angeordneten Lochplatten, wobei die zwei Lochplatten im wesentlichen gleiche Lochmuster aufweisen, wobei diese jedoch zueinander versetzt ausgeführt sind, so dass eine alternierende Kanalstruktur über die zwei Lochplatten ausgebildet wird. Es erfolgt eine Fluid- bzw. Gasleitung abwechselnd durch ein Loch der ersten Platte und dann ein Loch der zweiten Platte usw.

Durch diese Ausgestaltung erhält der Gasstrom eine Orientierung, wenn er von der mittleren Platte an die äußere Lochplatte geleitet wird, so dass eine Richtung des Gasstroms in Richtung der Membranelektrodenanordnung ausgebildet wird. Es erfolgt also eine gezielte Richtung der Gasströme auf die Oberfläche der Membranelektrodenanordnung. Die Lochblechstruktur ist zueinander versetzt angeordnet. Dadurch stellt ein Lochblech bezüglich des anderen Lochbleches einen zusätzlichen Strömungswiderstand dar, was der Strömung eine Geschwindigkeitskomponente in z-Richtung hinzufügt. Das verbessert die Anströmung der Elektrode und sorgt für einen geringen Polarisationswiderstand. Die entscheidende Randbedingung ist daher darin zu sehen, dass eine gezielte Strömung in Richtung der Membranelektrodenanordnungsoberfläche realisiert wird. Die angeströmte Kante eines Lochs der mittleren Platte wirkt als Umlenkung für den Gas- bzw. Fluidstrom und bewirkt eine Umlenkung des Gasstroms auf die Membranelektrodenanordnung. Es entsteht eine wechselnde Strömung zwischen der ersten und der zweiten Lochplatte.

Eine gasseitige oder fluidführende Verbindung von benachbarten Lochreihen innerhalb des Lochbleches ist nicht vorgesehen und gerade auch nicht notwendig für eine verbesserte homogene Anströmung über die gesamte Fläche der Membranelektrodenanordnung. Vielmehr ist davon abzusehen, da durch die hier vorgestellte Ausgestaltung über die in Lochreihen angeordnete alternierende Löcherleitung (Loch der mittleren Platte - Loch der äußeren Lochplatte) in Kombination mit dem Gaseinlass und dem Gasauslass eine bessere Homogenisierung als im Stand der Technik bekannt realisiert wird. Die Anordnung der Lochplatten bewirkt eine bessere Anströmung der Membranelektrodenanordnung in z-Richtung (also auf die Fläche der MEA). Somit ist eine bessere stoffliche Bereitstellung an der Oberfläche der Membranelektrodenanordnung sichergestellt, was zu einer Reduzierung des Polarisationswiderstandes und einer erhöhten Gesamteffizienz der Zellanordnung führt.

Die Verbindung zwischen Gaseinlass und Gasauslass wird durch die Löcher in den zwei Lochplattenmustern realisiert. Es bildet sich eine alternierende Lochleitungskanalstruktur aus, die erst durch die zwei Lochplatten mit den zueinander versetzt vorgesehenen Lochmustern realisiert wird.

Die Löcherleitung findet in parallel nebeneinander liegenden Lochleitungskanalstrukturen statt, die in Hauptströmungsrichtung der Gas- bzw. Fluidströmung orientiert ausgebildet sind. Ein Gasaustausch zwischen den benachbarten Lochreihen erfolgt nicht, ist zudem auch nicht notwendig. Es gibt auch keine durchgehenden ebenen Kanäle mehr, die eine Gasanströmung an die Membranelektrodenanordnung ermöglichen.

Durch die hier vorgestellte Ausgestaltung kann eine Interkonnektorstruktur geschaffen werden, die zudem über einen sehr großen Gaseinlass und Gasauslass verfügt, die sich in die Gesamtstruktur integrieren lässt. Dies verbessert ebenfalls die Homogenität der Gasanströmung auf die Membranelektrodenanordnung.

Eine der beiden Lochplatten besitzt Öffnungen zum Gaseinlass bzw. Gasauslass über den Gaseinlass bzw. den Gasauslass. Von der Verwendung im Stand der Technik bekannter Manifolds mit einer zentralen Verteilungs- bzw. Sammelfunktion, wird abgesehen. Vielmehr sind eine Mehrzahl von Öffnungen für die parallele Führung der Fluide vorgesehen.

Die vorgeschlagene Abfolge von Platten ist entlang der z-Richtung, also entlang des SOC-Stacks, inkompressibel. Über den gesamten Aktivbereich der Membranelektrodenanordnung sind zwischen den Lochreihen Bereiche verteilt, bei denen die 3 Bleche verpresst sind, wodurch keine zusätzlichen Stützstellen notwendig werden. Zudem können die Platten auf einfache Weise in einem einzelnen Prozessschritt gefertigt werden, was die Gesamtkosten der Anordnung gegenüber Interkonnektorstrukturen mit komplexen Verteilerstrukturen reduziert. Die Platten können zudem auf einfache Weise maschinell montiert werden.

Weiter können in einer besonders bevorzugten Ausgestaltungsvariante die Löcher einer Lochreihe einen Abstand entlang der Hauptrichtung des Fluidflusses zueinander haben, der kleiner als die Länge des Lochs entlang der Hauptrichtung des Fluidflusses ist, wobei jeweils ein Loch der zweiten Platte zwei jeweils benachbarte Löcher der ersten Platte fluidführend verbindet, und jeweils ein Loch der ersten Platte zwei jeweils benachbarte Löcher der zweiten Platte fluidführend verbindet.

In einer weiteren Ausgestaltung können die Löcher wenigstens abschnittsweise als Rundloch und/oder Langloch oder alle als Rundloch ausgebildet sein. Insbesondere die Ausgestaltung als Rundloch bietet Vorteile in Bezug auf die Verteilung und Strömung, da hierdurch eine häufige Umlenkung des Fluids erfolgt. Als Langloch ausgebildete Löcher können auch quer zur Hauptrichtung des Fluidflusses, also mit ihrer Längsseite um 90° zu dieser gedreht, angeordnet werden, so dass eine breitere Anströmfläche realisiert werden kann und eine häufigere Umlenkung erfolgt. Langlöcher, dazu zählen unter anderem auch ovale, längliche / abgerundete Öffnungen oder unterschiedlich große Öffnungen, bei beiden Lochblechen sind möglich und in bestimmten Anwendungen sinnvoll, wobei die Geometrie so zu wählen ist, dass etwaige Fertigungstoleranzen eine geringe Auswirkung auf den Strömungswiderstand haben.

Besonders bevorzugt sind die Löcher als Rundloch ausgebildet, was zu einer sehr guten Homogenisierung der Anströmung führt. Also sind besonders bevorzugt die Breite und die Länge der Löcher sowohl der ersten als auch der zweiten Platte identisch. Durch die versetzte Anordnung der Löcher der ersten und der zweiten Platte folgt eine Löcherleitungskanalstruktur, die eine gerichtete Anströmung auf die Membranelektrodenanordnung in z-Richtung ermöglicht.

Besonders bevorzugt kann die zweite Platte zwischen der ersten Platte und der Basisplatte angeordnet sein.

Weiter kann diesbezüglich bevorzugt die zweite Platte, also allgemein die mittlere Platte, Langlöcher bzw. Langlochstrukturen mit einer fluidführenden Verbindung zu dem Gaseinlass und weitere Langlöcher bzw. Langlochstrukturen mit einer fluidführenden Verbindung zu dem Gasauslass aufweisen, so dass mehrere parallele quasi alternierender Fluidkanäle zwischen dem Gaseinlass und dem Gasauslass ausgebildet sind. Hierdurch wird zudem sichergestellt, dass auch die Randbereiche der Membranelektrodenanordnung homogen angeströmt werden.

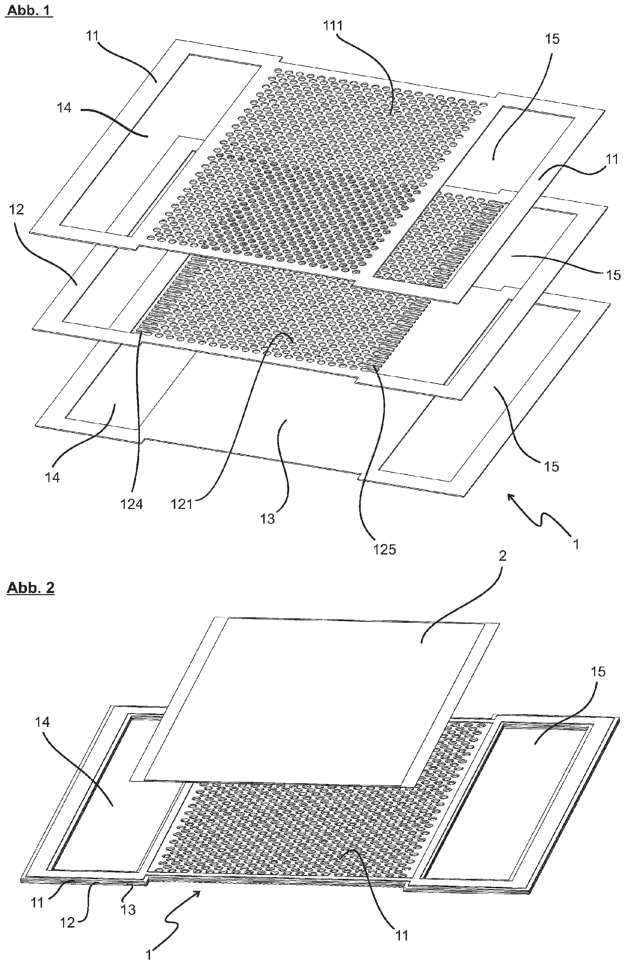

Weiter sind bevorzugt die Löcher benachbarter Lochreihen versetzt zueinander ausgebildet. Dies verbessert durch eine höhere Lochdichte die Homogenität der Anströmung und vergrößert die angeströmte Oberfläche der Membranelektrodenanordnung. Insbesondere erlaubt eine benachbart um 45° (vgl. Abb. 1) versetzt angeordnete Anordnung von kreisrunden Löchern eine Maximierung der aktiven Oberfläche der Membranelektrodenanordnung bei gleichzeitiger mechanischer Stabilität der Gesamtanordnung. Der Elektrolyt kann hierdurch beim Abkühlen auch unter Druckspannungen in Form gehalten werden.

Das erste Lochmuster und das zweite Lochmuster können in gleichen Ortsbereichen wenigstens abschnittsweise mit gleichartig ausgebildeten Löchern ausgebildet sein. Möglich ist die Ausgestaltung unterschiedlicher Zonenbereiche mit unterschiedlichen Lochstrukturen. Dabei ist die Bedingung zu beachten, dass ein Loch der ersten Platte zwei Löcher der zweiten Platten fluidführend verbindet und das ein Loch der zweiten Platte zwei Löcher der ersten Platte miteinander fluidführend verbindet, wobei sich dies jeweils auf die Lochreihen bezieht. Eine Verbindung der Lochreihen ist, außer über den gemeinsamen Gaseinlass auf der einen Seite und den gemeinsamen Gasauslass auf der anderen Seite, nicht vorgesehen.

In einer besonders bevorzugten Ausgestaltung können die Platten als Blech ausgebildet sein. Die Bleche können bevorzugt aus Stahl, besonders bevorzugt aus ferritischem Stahl, insbesondere Crofer 22 APU (1.4760), sein, um insbesondere eine hohe Temperaturbeständigkeit, mechanische Stabilität bei verhältnismäßig günstigen Kosten zu erzielen. Die bevorzugte Blechdicke beträgt für die aktuelle Verwendung 0,5 mm pro Platte.

Die Bleche können mittels Stanzen oder mittels eines zerspanenden Verfahrens, insbesondere Feinschneiden, hergestellt werden.

Die erfindungsgemäße SOC-Stack-Anordnung weist eine Stackstruktur mit abwechselnd aufeinander gestapelten erfindungsgemäßen Interkonnektoren und Membranelektrodenanordnungen auf.

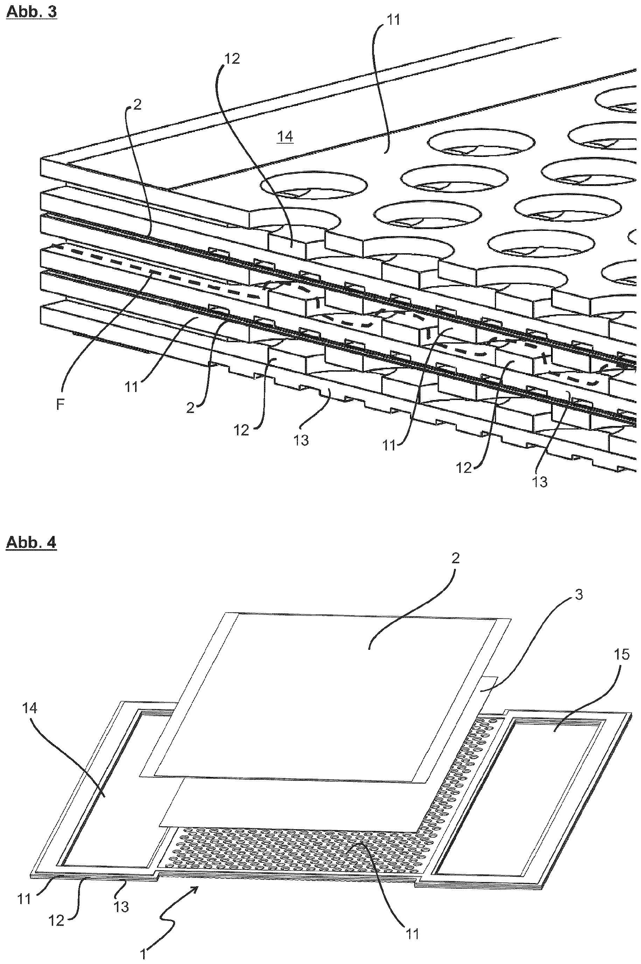

Zwischen dem Interkonnektor und der Membranelektrodenanordnungen kann ein Nickelschaum oder ein Nickelnetz vorgesehen sein. Dies kann einerseits eine Verbesserung der Kontaktierung zwischen Membranelektrodenanordnung und Interkonnektor und andererseits eine Verbesserung der Homogenität der Anströmung der Membranelektrodenanordnung bewirken. Das Nickelnetz kann kalandriert / verpresst werden und ist dadurch kaum kompressibel in Richtung des Stacks (vgl. Abb. 4 - z-Richtung). Das Hinzufügen eines Nickelnetzes kann also den Polarisationswiderstand zusätzlich verringern.

Nachfolgend wird die Erfindung anhand der beiliegenden Abbildungen in der Abbildungsbeschreibung beschrieben. Die nachfolgenden exemplarischen weiteren Ausführungen sollen bzw. müssen nicht zwingend beschränkend gewertet werden, sondern stellen vielmehr besondere Ausführungen dar und sollen die hier offenbarte Erfindung erläutern.

Es zeigen:
- Abb. 1: eine Darstellung der übereinander zu einem Interkonnektor anzuordnenden drei Platten 11, 12 und 13 mit erkennbarer Struktur der einzelnen Platten;
- Abb. 2: eine Darstellung des erfindungsgemäßen Interkonnektors 1 mit einer darüber anzuordnenden Membranelektrodenanordnung 2;
- Abb. 3: eine Schnittdarstellung in Hauptströmungsrichtung des Gases F entlang der versetzten Löcher-Lochreihe in einer Anordnung aus Interkonnektor - Membranelektrodenanordnung - Interkonnektor- Membranelektrodenanordnung - Interkonnektor und
- Abb. 4: eine Darstellung des erfindungsgemäßen Interkonnektors 1 mit einer darüber anzuordnenden Membranelektrodenanordnung 2, wobei ergänzend zwischen Interkonnektor 1 und der Membranelektrodenanordnung 2 ein Nickelnetz 3 angeordnet ist.

In Abb. 1 ist eine Darstellung der übereinander anzuordnenden drei Platten 11, 12 und 13 mit erkennbarer Struktur der einzelnen Platten.

Der Interkonnektor 1 besteht aus einer Basisplatte 13 auf die eine zweite Platte 12 und eine erste Platte 11 aufgelegt sind. Die zweite Platte 12 befindet sich in der Mitte zwischen der ersten Platte 11 und der Basisplatte 13. Die Basisplatte 13 ist zu der zweiten Platte 12 hin eben und geschlossen ausgebildet. Die zweite Platte 12 weist ein Lochmuster 121 auf, die erste Platte 11 weist ebenfalls ein Lochmuster 111 auf, jedoch ist das Lochmuster 111 zu dem Lochmuster 121 derart versetzt angeordnet, dass eine Fluidführungsstruktur ausgebildet wird, wenn die Platten miteinander flächig in Kontakt gebracht werden, die alternierend ist, nämlich immer abwechselnd durch die Löcher der Ebene der ersten und die Löcher der Ebene der zweiten Platte 12 geführt ist. Ein Loch der ersten Platte 11 verbindet zwei Löcher der zweiten Platte 12 miteinander und ein Loch der zweiten Platte 12 verbindet zwei Löcher der ersten Platte 12 miteinander. Es bildet sich eine Lochleitungsstruktur für Fluide aus, wobei die Fluide eine Richtungskomponente durch die erzwungene Umleitung in Richtung der z- Achse (in Stapelrichtung) erfahren.

Die Lochstruktur wird in der mittleren Plattenebene 12 auf der einen Seite durch jeweils ein Randloch 124 für den Gaseinlass pro Lochreihe mit einem Gaseinlass 14 und auf der anderen Seite durch jeweils ein Randloch 125 für den Gasauslass pro Lochreihe mit einem Gasauslass 15 verbunden.

Der Gaseinlass 14 ist derart breit ausgebildet, dass Gas an alle Randlöcher 124 zugeführt werden kann und alle Lochreichen entsprechend versorgt sind. Ebenso ist der Gasauslass 15 ebenfalls entsprechend breit dimensioniert ausgebildet, damit das umgesetzte Gas abgeführt werden kann. Die Dimensionierung von Gaseinlass 14 und Gasauslass 15 ergibt sich aus der Anzahl der insgesamt mit Gas zu versorgenden Zellen. Alle drei Platten 11, 12, 13, die hier beispielsweise als 0,5mm dicke Blechplatten ausgebildet sind, weisen gleichgroße Ausschnitte für den Gaseinlass 14 und den Gasauslass 15 auf, so dass diese durch die gesamte Stapelanordnung geführt sind.

Es erfolgt also eine Führung des Fluids von dem Gaseinlass 14 über die Randlöcher 124 durch die Löcher der ersten 11 und der zweiten Platte 12 in alternierender Weise bis zu den Randlöchern 125 und in den Gasauslass 15. Hierbei wird jeweils beim Übergang von der mittleren zweiten Platte 12 in die der Membranelektrodenanaordnung zugewandten ersten Platte 11 eine Richtungsänderung des Fluidstroms bewirkt, so dass Gas deutlich effektiver an die Oberfläche der Membranelektrodenanaordnung herangeführt wird, wo diese als Edukt für eine elektrochemische Umsetzung zur Verfügung stehen sollen. Die ausgebildeten Gaskanäle sind hierbei in nebeneinander angeordneten Lochreihen angeordnet, die nicht miteinander verbunden sind, was für eine gezielte Umlenkung vorteilhaft ist, da kein seitlicher Ausgleich stattfinden muss.

Die zueinander versetzt angeordneten parallelen Lochreihen erlauben eine Maximierung der Lochdichte und damit eine Maximierung der angeströmten Oberfläche der MEA 2, während zudem eine mechanische Stabilisierung der MEA 2 erreicht wird.

Abb. 2 zeigt eine Darstellung des erfindungsgemäßen Interkonnektors 1 mit einer darüber anzuordnenden Membranelektrodenanordnung 2. Die Interkonnektoreinheit 1 umfasst die drei übereinander gestapelten Platten 11, 12, 13, wobei die Basisplatte 13 unten angeordnet ist und die erste 11 und zweite Platte 12 darauf angeordnet sind, so dass sich insgesamt eine Lochleitungsstruktur in der Ebene ausbildet. Die oben sichtbare Lochstruktur, also das Lochmuster der ersten Platte 111 stellt die Austrittsöffnungen für das Gas dar, über welche das Gas wiederholt an die Oberfläche der Membranelektrodenanordnung 2 herangeführt wird.

In Abb. 3 ist eine Schnittdarstellung in Hauptströmungsrichtung des Gases F entlang der versetzten Löcher-Lochreihe in einer Anordnung Interkonnektor 1 - Membranelektrodenanordnung 2 - Interkonnektor 1 - Membranelektrodenanordnung 2 - Interkonnektor 1, wie diese auch in einem SOC-Stack angeordnet sind.

Es ist in dieser Darstellung deutlich die alternierende Lochleitungsstruktur zu erkennen, die durch das Lochmuster 111 der ersten Platte und das dazu versetzt ausgebildete Lochmuster 121 der zweiten Platte ausgebildet wird.

Die gestrichelte Linie F stellt die Gasströmung dar, wobei immer beim Übergang von der mittleren zweiten Platte 12 in ein Loch der darüber angeordneten und der MEA 2 zugewandten ersten Platte 11 eine Richtungskomponente des Gasstroms in z-Richtung entsteht, durch welche das Gas effektiver an die Oberfläche der MEA 2 herangeführt und der Polarisationswiderstand abgesenkt wird.

Auf der Unterseite der Basisplatte 13 ist zusätzlich eine Kanalstruktur dargestellt, über die die Produkte von der Membranelektrodenanordnung 2 jeweils abgeführt werden können.

Abb. 4 zeigt eine Darstellung des erfindungsgemäßen Interkonnektors 1 mit einer darüber anzuordnenden Membranelektrodenanordnung 2, wie in Abbildung 2 dargestellt, wobei ergänzend zwischen Interkonnektor 1 und der Membranelektrodenanordnung 2 ein Nickelnetz 3 angeordnet ist. Alle Komponenten werden in einer Stack-Anordnung unmittelbar übereinandergelegt und in wiederholender Weise mehrfach übereinander angeordnet. Das Nickelnetz 3 ist optional zu sehen und kann zur Verbesserung der Kontaktierung und zur Homogenisierung des Gasflusses zwischen MEA 2 und Interkonnektor 1 platziert werden. Das Nickelnetz 3, hier über den Interkonnektor gelegt, wird kalandriert / verpresst und ist dadurch kaum kompressibel in z-Richtung. Gegenüber herkömmlichen SOC-Anordnungen kann ein dünneres Nickelnetz verwendet werden.

### Bezugszeichenliste

- 1: Interkonnektor
- 11: erste Platte
- 111: Lochmuster der ersten Platte
- 12: zweite Platte
- 121: Lochmuster der zweiten Platte
- 124: Gaseinlass-seitiges Randloch
- 125: Gasauslass-seitiges Randloch
- 13: Basisplatte
- 14: Gaseinlass
- 15: Gasauslass
- 2: Membranelektrodenanordnung (MEA)
- 3: Nickelnetz
- F: Gasströmung / Hauptrichtung des Fluidflusses

## Patentansprüche

1. SOC-Stack-Interkonnektor zur Gasverteilung für eine Brennstoff- und/oder eine Elektrolysezellenanordnung aufweisend:
- eine Basisplatte (13), die auf einer ersten Seite mit einer Membranelektrodenanordnung (2) kontaktierbar ist,
- eine auf der zweiten Seite der Basisplatte (13) angeordnete Plattenstruktur (11-12),
wobei die Plattenstruktur mit einer ersten Seite (12) mit der Basisplatte (13) und mit einer zweiten Seite (13) mit einer weiteren Membranelektrodenanordnung (2) kontaktierbar ist,
wobei die Plattenstruktur (11-12) eine erste Platte (11) und eine zweite Platte (12) umfasst, die übereinander angeordnet sind, und die erste Platte (11) und die zweite Platte (12) eine gemeinsame Verteilungsstruktur zur Gasverteilung ausbilden,
wobei die erste (11) und die zweite Platte (12) sowie die Basisplatte (13) jeweils einen Gaseinlass (14) und einen Gasauslass (15) aufweisen,
und wobei sich die Hauptrichtung eines Fluidflusses (F) durch die gemeinsame Verteilungsstruktur in einer linearen Richtung zwischen dem Gaseinlass (14) und dem Gasauslass (15) erstreckt, und die gemeinsame Verteilungsstruktur Verbindungen zu dem Gaseinlass (14) und Verbindungen zu dem Gasauslass (15) aufweist,
**dadurch gekennzeichnet, dass**
- die erste Platte (11) als Teil der gemeinsamen Verteilungsstruktur ein erstes Lochmuster (111) mit einer Vielzahl von Löchern in parallel angeordneten entlang der Hauptrichtung des Fluidflusses (F) ausgerichteten Lochreihen aufweist und kanalfrei ausgebildet ist;
- die zweite Platte (12) als Teil der gemeinsamen Verteilungsstruktur ein zweites Lochmuster (112) mit einer Vielzahl von Löchern in parallel angeordneten entlang der Hauptrichtung des Fluidflusses (F) ausgerichteten Lochreihen aufweist und kanalfrei ausgebildet ist; und
- das erste Lochmuster (111) zu dem zweiten Lochmuster (112) in Hauptrichtung des Fluidflusses (F) versetzt ausgebildet ist, wobei eine Kanalstruktur in Hauptrichtung des Fluidflusses (F) bei der Übereinanderanordnung der ersten (11) und der zweiten Platte (12) ausgebildet wird, die zwischen der ersten (11) und der zweiten Platte (12) in Hauptrichtung des Fluidflusses (F) alterniert.

2. SOC-Stack-Interkonnektor nach Anspruch 1,
**dadurch gekennzeichnet, dass**
die Löcher einer Lochreihe einen Abstand entlang der Hauptrichtung des Fluidflusses (F) zueinander haben, der kleiner als die Länge des Lochs entlang der Hauptrichtung des Fluidflusses (F) ist, wobei
- jeweils ein Loch der zweiten Platte (12) zwei jeweils benachbarte Löcher der ersten Platte (11) fluidführend verbindet, und
- jeweils ein Loch der ersten Platte (11) zwei jeweils benachbarte Löcher der zweiten Platte (12) fluidführend verbindet.

3. SOC-Stack-Interkonnektor nach Anspruch 1 oder 2,
**dadurch gekennzeichnet, dass**
die Löcher wenigstens abschnittsweise als Rundloch und/oder Langloch oder alle als Rundloch ausgebildet sind.

4. SOC-Stack-Interkonnektor nach einem der vorangehenden Ansprüche,
**dadurch gekennzeichnet, dass**
die zweite Platte (12) zwischen der ersten Platte (11) und der Basisplatte (13) angeordnet ist.

5. SOC-Stack-Interkonnektor nach dem vorangehenden Anspruch,
**dadurch gekennzeichnet, dass**
die zweite Platte (12) Langlöcher mit einer fluidführenden Verbindung zu dem Gaseinlass (14) und weitere Langlöcher mit einer fluidführenden Verbindung zu dem Gasauslass (15) aufweist.

6. SOC-Stack-Interkonnektor nach einem der vorangehenden Ansprüche,
**dadurch gekennzeichnet, dass**
die Löcher benachbarter Lochreihen versetzt zueinander ausgebildet sind.

7. SOC-Stack-Interkonnektor nach einem der vorangehenden Ansprüche,
**dadurch gekennzeichnet, dass**
das erste Lochmuster (111) und das zweite Lochmuster (112) in gleichen Ortsbereichen wenigstens abschnittsweise mit gleichartig ausgebildeten Löchern ausgebildet sind.

8. SOC-Stack-Interkonnektor nach einem der vorangehenden Ansprüche,
**dadurch gekennzeichnet, dass**
die Platten ausgebildet sind als Blech und aus Stahl, bevorzugt aus ferritischem Stahl, besonders bevorzugt aus Crofer 22 APU (1.4760) bestehen.

9. SOC-Stack-Interkonnektor nach einem der vorangehenden Ansprüche,
**dadurch gekennzeichnet, dass**
die Platten (11, 12, 13) gestanzt oder zerspannend hergestellt sind.

10. SOC-Stack-Anordnung
aufweisend eine Stackstruktur mit abwechselnd aufeinander gestapelten Interkonnektoren nach einem der vorangehenden Ansprüche und Membranelektrodenanordnungen.

11. SOC-Stack-Anordnung nach Anspruch 10,
**dadurch gekennzeichnet, dass**
zwischen Interkonnektoren und Membranelektrodenanordnungen ein Nickelschaum oder ein Nickelnetz vorgesehen ist.
